# EUROPEAN PATENT SPECIFICATION

(11) **EP 3 792 391 B1**
(45) Date of publication and mention of the grant of the patent: **08.05.2024**
(21) Application number: 20192853.8
(22) Date of filing: 26.08.2020
(51) Int. Cl.: D06H 3/08, B65H 16/02, D06H 7/02, D06H 7/04, G01N 21/898

(54) **SYSTEM FOR THE CONTROL AND MANAGEMENT OF FABRICS**
SYSTEM ZUR STEUERUNG UND VERWALTUNG VON STOFFEN
SYSTÈME DE COMMANDE ET DE GESTION DE TISSUS

(30) Priority: 12.09.2019 IT 201900016127
(43) Date of publication of application: 17.03.2021
(73) Proprietor: Manteco S.p.A., 59013 Prato Montemurlo (IT)
(72) Inventor: MANTELLASSI, Matteo, 59100 Prato (IT); MANTELLASSI, Marco, 59100 Prato (IT); MANTELLASSI, Franco, 59100 Prato (IT)
(74) Representative: Firmati, Leonardo

(56) References cited:
- EP-A1- 3 366 831
- WO-A1-2018/214661
- CN-U- 203 096 481
- JP-A- 2007 291 535
- KR-A- 20080 057 520
- US-A1- 2001 031 079
- US-A1- 2016 077 019

## Description

This invention relates to a system for the control and management of fabrics.

Currently, with the increasing number of products present in the sales catalogues and the request for increasingly personalised products, in particular in the sector for the production of fabrics, the need is increasingly felt to carry out accurate controls with the aim of optimising the entire production process and monitoring many aspects of the fabrics in such a way as to manage them in the most suitable manner, during production, storage or packaging.

The aspects to be controlled and managed may be, for example, aspects relating to the quality control of the fabric during both production and post-production, the quantities produced of a predetermined fabric, the quantities available in storage of a particular fabric following orders.

At least with regard to the quality control of the fabrics, there are currently devices which are able to perform a quality control using machines.

The quality control currently known is performed by making the fabric slide during production or the fabric already produced and wound in relative rolls above a back-lit portion of the above-mentioned machine.

A user observing the fabric sliding on the backlit portion reports any defective parts.

The most common defects are due to chromatic differences or tears or holes on the fabric.

The above-mentioned quality control makes it possible to reduce the risk that a fabric having considerable defects reaches the last production steps, for example the packaging of the finished product.

However, the above-mentioned quality control does not allow a high level of reliability in detecting defects as it is strictly functional on the experience of the user who works there.

Therefore, the greater the user's experience, the smaller the defect will be, and vice versa.

A further drawback of the above-mentioned prior art system is that it does not allow any control and/or management of the fabric in terms of storage except for the control of any defects on the fabric as mentioned above.

More specifically, the above-mentioned prior art system does not contribute to optimising the process for producing a fabric.

For this purpose, there are currently prior art processes for the organised storage of fabrics, typically in the form of rolls, which involve the batching of the storage system and the individual identification of each single roll of fabric by applying a suitable label on the roll. The label applied on the roll is put in such a way that it can be visible to the user who manages the store and on this is shown the main production data of the specific fabric and any various updates following sales orders. In this way, the search for a single fabric inside the storage system, for example after receiving an order from a customer, is quite easy and simple.

However, the prior art system for managing the storage system has considerable drawbacks in particular with regard to the updating of the individual quantities (linear metres) of the individual rolls of fabric following any partial sales orders.

A critical situation is in fact that in which an order by a customer does not involve an entire roll of fabric but only a part of it.

In effect, if the order is for the entire roll there are no particular critical aspects since the user of the store knows the total length of fabric in the roll from the final production steps (information applied on the label).

However, as is often the case, the customer's order does not cover the entire length of the roll but only a more or less significant part.

In this case, the management of the storage system with the prior art systems becomes difficult as it is not easy and fast to mark the remaining updated length on the specific roll following a partial order.

Moreover, even if the user is able to mark the remaining length of the specific roll on the relative label, it will not be easy and not even reliable, for example for the retailers, to know the actual availability of each individual fabric in storage instant by instant for any subsequent orders.

Several examples of system for controlling and managing fabrics are known, such as those described in documents US2016077019, WO2018/214661, CN203096481, JP2007291535 AND KR20080057520.

A first aim of this invention is, therefore, to provide a system for controlling and managing fabrics which is able to allow an automatic management, updated in real time and reliable of the individual quantities of the fabrics in the storage system.

A further aim of the invention is to provide a system for controlling and managing fabrics which is able to automatically store a plurality of parameters of the fabric being processed.

A further aim of a system for the control and management of fabrics according to the invention is to allow the main operations for the control of the quality of a fabric to be performed automatically and not depending on the exclusive experience of the user.

The above aims are achieved by a system for the control and management of fabrics comprising the technical features described in one or more of the accompanying claims.

Further features and advantages of the invention are more apparent in the non-limiting description which follows of a preferred embodiment of a system for the management and control of fabrics.

The description is set out below with reference to the accompanying drawings which are provided solely for purposes of illustration without restricting the scope of the invention and in which:
- Figure 1 is a schematic side view of a first embodiment of a system for controlling and managing fabrics according to the invention;
- Figure 2 is a schematic top view of the first embodiment shown in Figure 1;
- Figure 3 is a schematic side view of a second embodiment of a control and management system according to the invention.

The reference numeral 1 generically denotes a system for control and management of fabrics T according to the invention.

The system 1 for the management and control of fabrics T comprises a first station 2 designed for moving a fabric T, a second station 3 also for moving the fabric T operatively connected to the first station 1.

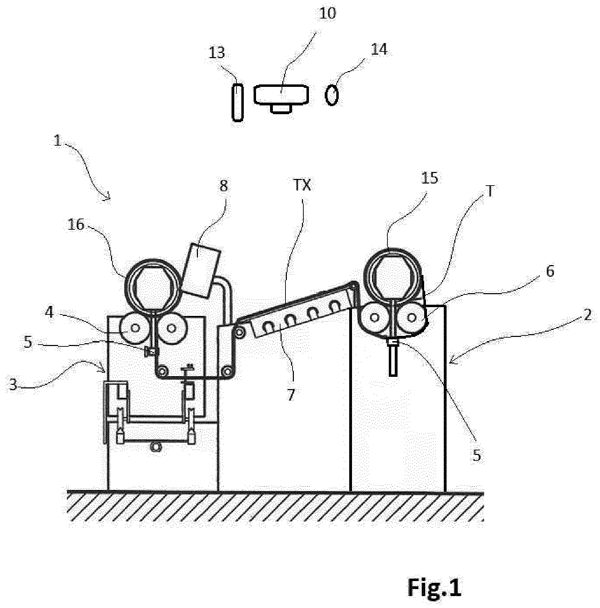

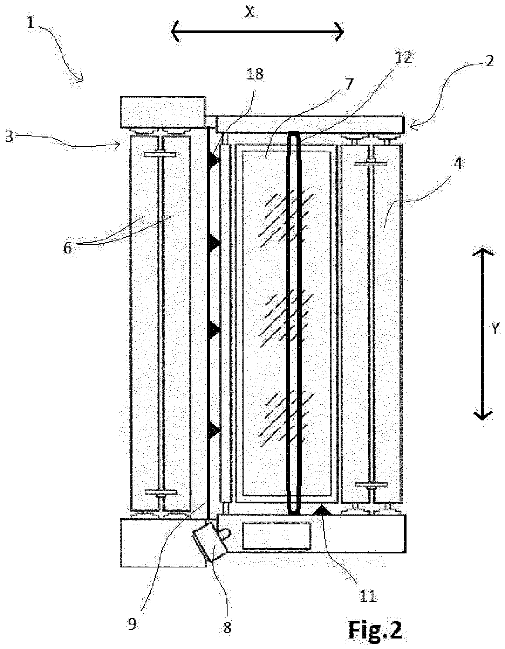

Figures 1 and 2 show a first embodiment in which the first 2 and the second 3 comprise respective cylinders 4, 6 for supporting and moving the fabric T which in this solution is wound in respective rolls 15, 16.

The first station 2, and also, vice versa, the second station 3, may unwind or wind the roll 15 and 16 as a function of the feed direction requested by the user of the system 1.

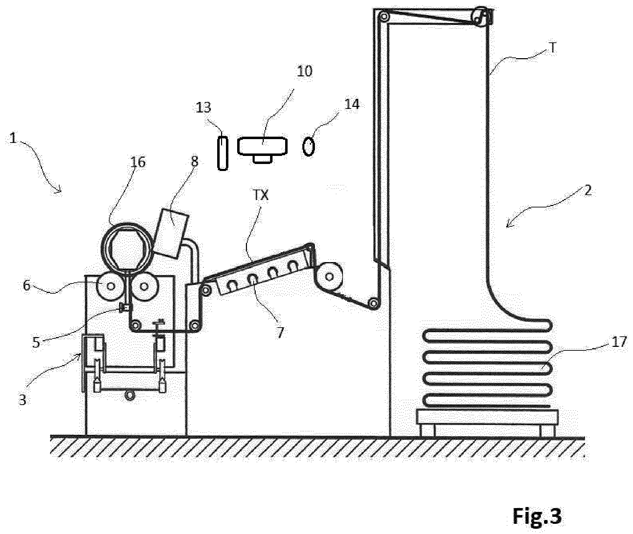

Figure 3 shows, on the other hand, a second embodiment of a system 1 according to the invention wherein the roll 15 of fabric T is replaced with a zone 17 for rolling the fabric T.

In this second solution the second station 3 can wind the fabric T in the roll 16.

The system 1 also comprises a light source 7 positioned in an intermediate position between the first station 2 and the second station 3 configured to illuminate from the bottom upwards a predetermined portion TX of the fabric T.

The predetermined portion TX of the fabric T is the portion between the outfeed of the first station 2 and the infeed of the second station 3.

The light source 7 may be any light source, generally halogen, neon or LED.

The light source 7 may be positioned below a transparent or translucent panel which serves as a support surface for the portion TX of the fabric T passing.

The system 1 also comprises an optical device 10 for acquiring an image or a video of the predetermined portion TX of the fabric T.

The optical device 10 may comprise any device for acquiring individual images (cameras) or in sequences of images (video cameras).

The optical device 10 is positioned advantageously above the first 2 and second 3 station, for example installed on a respective support, and faces towards the portion TX of fabric T in question.

The system 1 for controlling and managing fabrics T according to the invention also comprises a data processing and storage unit 8 connected to the optical device 10 and configured for associating identification information of the fabric T with the image and/or video of the predetermined portion TX of the fabric T.

The data processing and storage unit 8 associate with a photograph and/or video acquired of the portion TX of the fabric T information, as well as the commercial name and the design of the fabric, relating to any chromatic or structural defects present, predominant colours present in TX in such a way as to catalogue the fabric T into specific colour categories (red, yellow, green...), repeated geometrical patterns so as to catalogue the fabric T in specific categories (squares, rows, circles etc.).

These catalogues of the fabric T detected automatically through the system 1 according to the invention allow a subsequent search in the database which is easier and optimised by the users who can make selections not only by searching for the name of the fabrics, as currently known, but also by searching for chromatic and/or geometrical characteristics of the fabrics.

Therefore, merely by way of example, a system 1 according to the invention allows a user to search in a database for all the fabrics T "with predominance of red and hatched pattern" or other types of selection which are advantageous for the purposes of managing the store and the sales orders.

Advantageously, the control and management system 1 according to this invention also comprises a second light source 14 also positioned in an intermediate position between the first station 2 and the second station 3 and configured to illuminate the predetermined portion TX of the fabric T from the top downwards.

Depending on the type of control or operation of the system 1 according to the invention it may be advantageous to switch on only the first light source 7, only the second 14 or both.

The system 1 also comprises a metric feedback device 12 positioned below the predetermined portion TX, for example on the supporting surface, and facing towards the optical device 10.

The metric feedback device 12 is used for storing a further parameter of the fabric T in the storage unit 8, that is, the actual height of the fabric T.

To obtain this, it is sufficient for the optical device 10 to acquire the image and/or the video of the fabric T positioned above the metric feedback device 12 which will protrude laterally from it and reveal the overall dimension of the height of the fabric T.

An alternative embodiment of the metric feedback device 12 may comprise a bar with a plurality of photocells positioned facing the lower surface of the fabric in such a way as to detect the presence or absence of the fabric at a predetermined single photocell, that is to say, its overall height.

The system 1 also advantageously comprises at least a first transversal cutting device 11 positioned between the first station 2 and the second station 3 for cutting the fabric T along a transversal direction Y.

This operation can be used when it is necessary to obtain different rolls of fabric T having the same height but different thicknesses from a roll of fabric T.

Advantageously, moreover, the system 1 may comprise a second longitudinal cutting device 18 positioned between the first station 2 and the second station 3 for cutting the fabric T along a longitudinal direction X.

The cutting device 18 is advantageously mounted on a respective linear guide 9 in such a way as to be easily positioned by the user.

This operation can be used when it is necessary to obtain different rolls of fabric from a roll of fabric T having different heights and equal thicknesses, for example during sampling operations.

Moreover, advantageously, the control and management system 1 according to the invention and in particular the first 2 or the second 3 station comprise means 5 for measuring the weight of the fabric T.

The weight measuring means 5 may, for example, comprise load cells or devices which are similar and suitable for the purpose.

In order to allow the winding and unwinding of the rolls of fabric T in the first 2 and/or in the second 3 movement station, these comprise at least one motorised cylinder 4, 6 which in direct contact with the roll of fabric T allows the rotational movement of the fabric.

The motorised cylinder 4, 6 preferably also comprises an integrated metre counter device configured to measure the length of the fabric T.

In this way it is possible to also make the unit 8 store the total length of the roll of fabric T.

This function is very advantageous both in the step of first passage of the fabric T on the system 1 (that is, after the production) and for any subsequent steps following partial orders relative to the total length of the roll of fabric T.

In effect, it will be possible to keep the company's database always up to date with the available lengths of the various fabrics T instant by instant, optimising both the management of the warehouse and the sale.

## Claims

1. A system (1) for management and control of fabrics comprising:
- a first station (2) for moving a fabric (T),
- a second station (3) for moving said fabric (T) operatively connected to said first station (1),
- a light source (7) positioned in an intermediate position between said first station (2) and said second station (3) configured to illuminate from the bottom upwards a predetermined portion (TX) of said fabric (T),
- an optical device (10) for acquiring an image or a video of said predetermined portion (TX) of said fabric (T),
- a unit (8) for processing and storing data connected to said optical device (10) and designed to associate with said image or video of said predetermined portion (TX) of said fabric (T) identification information of said fabric (T), wherein said information relative to said fabric (T) comprises information relative to a chromatic predominance of the fabric (T) in such a way as to catalogue said fabric (T) into specific colour categories and to a predominance of repeated geometrical patterns so as to catalogue said fabric (T) in specific categories and said information is processed by said processing and storing unit (8) in corresponding categorisations, **characterised in that** it comprises a metric feedback device (12) designed to be positioned below said predetermined portion (TX), facing towards the optical device (10), for storing a further parameter of the fabric (T) in the storage unit 8, that is, the actual height of the fabric (T).

2. The system (1) according to claim 1, also comprising a second light source (14) positioned in an intermediate position between said first station (2) and said second station (3) configured for illuminating from the top downwards said predetermined portion (TX) of said fabric (T).

3. The system (1) according to any one of the preceding claims, also comprising an optical pointing device (13) connected to said optical device (10) and configured to indicate any defective portions on said predetermined portion (TX) of said fabric (T) in transit between said first station (2) and said second station (3).

4. The system (1) according to any one of the preceding claims, also comprising a first cutting device (11) positioned between said first station (2) and said second station (3) for cutting said fabric (T) along a transversal direction (Y).

5. The system (1) according to any one of the preceding claims, also comprising a second cutting device (18) positioned between said first station (2) and said second station (3) for cutting said fabric (T) along a longitudinal direction (X).

6. The system (1) according to any one of the preceding claims, wherein said at least the first (2) or second (3) station comprise means (5) for measuring the weight of said fabric (T).

7. The system (1) according to any one of the preceding claims, said first station (2) and said second station (3) comprising at least one motorised cylinder (4, 6), said cylinder (4, 6) comprising an integrated metre counter device configured to measure the length of said fabric (T).

8. The system (1) according to any one of the preceding claims, wherein the data processing and storage unit (8) is configured for identifying on said image or video received from said optical device (10) parts of said predetermined portion (TX) of said fabric (T) having: chromatic or structural defects or portions of said fabric having chromatic or geometrical patterns, said processing and storage unit (8) associating to said chromatic or structural defects or portions of said fabric (T) having chromatic or geometrical patterns information relating to said fabric (T).

## Patentansprüche

1. System (1) zur Verwaltung und Steuerung von Stoffen, umfassend:
- eine erste Station (2) zur Bewegung eines Stoffs (T),
- eine zweite Station (3) zur Bewegung des Stoffs (T), die betriebswirksam mit der ersten Station (1) verbunden ist,
- eine Lichtquelle (7), die in einer Zwischenposition zwischen der ersten Station (2) und der zweiten Station (3) positioniert und dazu ausgelegt ist, einen vorbestimmten Abschnitt (TX) des Stoffs (T) von unten nach oben zu beleuchten,
- eine optische Vorrichtung (10) zur Erfassung eines Bildes oder eines Videos des vorbestimmten Abschnitts (TX) des Stoffs (T),
- eine Einheit (8) zur Verarbeitung und Speicherung von Daten, die mit der optischen Vorrichtung (10) verbunden und dazu ausgebildet ist, dem Bild oder dem Video des vorbestimmten Abschnitts (TX) des Stoffs (T) Identifikationsinformationen des Stoffs (T) zuzuordnen, wobei die Informationen relativ zum Stoff (T) Informationen relativ zu einer chromatischen Dominanz des Stoffs (T), um den Stoff (T) in spezifische Farbkategorien zu katalogisieren, und zu einer Dominanz wiederholter geometrischer Muster umfassen, um den Stoff (T) in spezifischen Kategorien zu katalogisieren, und die Informationen von der Verarbeitungs- und Speichereinheit (8) in entsprechenden Kategorisierungen verarbeitet werden, **dadurch gekennzeichnet, dass** sie eine metrische Rückkopplungsvorrichtung (12) umfasst, die dazu ausgebildet ist, unter dem vorbestimmten Abschnitt (TX) positioniert zu werden, der der optischen Vorrichtung (10) zugewandt ist, um einen weiteren Parameter des Stoffs (T) in der Speichereinheit (8) zu speichern, d. h. die tatsächliche Höhe des Stoffs (T) .

2. System (1) nach Anspruch 1, ferner umfassend eine zweite Lichtquelle (14), die in einer Zwischenposition zwischen der ersten Station (2) und der zweiten Station (3) positioniert und dazu ausgelegt ist, den vorbestimmten Abschnitt (TX) des Stoffs (T) von oben nach unten zu beleuchten.

3. System (1) nach einem der vorhergehenden Ansprüche, umfassend auch eine optische Zeigevorrichtung (13), die mit der optischen Vorrichtung (10) verbunden und ausgelegt ist, um irgendwelche defekten Abschnitte auf dem vorbestimmten Abschnitt (TX) des Stoffs (T) beim Übergang zwischen der ersten Station (2) und der zweiten Station (3) anzuzeigen.

4. System (1) nach einem der vorhergehenden Ansprüche, umfassend auch eine erste Schneidvorrichtung (11), die zwischen der ersten Station (2) und der zweiten Station (3) zum Schneiden des Stoffs (T) entlang einer Querrichtung (Y) positioniert ist.

5. System (1) nach einem der vorhergehenden Ansprüche, umfassend auch eine zweite Schneidvorrichtung (18), die zwischen der ersten Station (2) und der zweiten Station (3) zum Schneiden des Stoffs (T) entlang einer Längsrichtung (X) positioniert ist.

6. System (1) nach einem der vorhergehenden Ansprüche, wobei die mindestens erste (2) oder zweite (3) Station Mittel (5) zum Messen des Gewichts des Stoffs (T) umfasst.

7. System (1) nach einem der vorhergehenden Ansprüche, wobei die erste Station (2) und die zweite Station (3) mindestens einen motorisierten Zylinder (4, 6) umfassen, wobei der Zylinder (4, 6) eine integrierte Meterzählvorrichtung umfasst, die ausgelegt ist, um die Länge des Stoffs (T) zu messen.

8. System (1) nach einem der vorhergehenden Ansprüche, wobei die Datenverarbeitungs- und Speichereinheit (8) ausgelegt ist, um auf dem Bild oder dem Video, das von der optischen Vorrichtung (10) empfangen wird, Teile des vorbestimmten Abschnitts (TX) des Stoffs (T), aufweisend: chromatische oder strukturelle Defekten oder Abschnitte des Stoffs mit chromatischen oder geometrischen Mustern zu identifizieren, wobei die Verarbeitungs- und Speichereinheit (8) den chromatischen oder strukturellen Defekten oder Abschnitten des Stoffs (T) mit chromatischen oder geometrischen Mustern Informationen, die sich auf den Stoff (T) beziehen, zuordnet.

## Revendications

1. Système (1) de gestion et de commande de tissus, comprenant :
- un premier poste (2) pour déplacer un tissu (T),
- un deuxième poste (3) pour déplacer ledit tissu (T) relié de manière fonctionnelle audit premier poste (1),
- une source lumineuse (7), positionnée dans une position intermédiaire entre ledit premier poste (2) et ledit deuxième poste (3), configurée pour éclairer du bas vers le haut une portion prédéterminée (TX) dudit tissu (T),
- un dispositif optique (10) pour acquérir une image ou une vidéo de ladite portion prédéterminée (TX) dudit tissu (T),
- une unité (8), pour traiter et stocker des données, reliée audit dispositif optique (10) et conçue pour associer à ladite image ou vidéo de ladite portion prédéterminée (TX) dudit tissu (T) des informations d'identification dudit tissu (T), dans lequel lesdites informations relatives audit tissu (T) comprennent des informations relatives à une prédominance chromatique du tissu (T) de manière à cataloguer ledit tissu (T) dans des catégories de couleurs spécifiques et à une prédominance de motifs géométriques répétés de manière à cataloguer ledit tissu (T) dans des catégories spécifiques, et lesdites informations sont traitées par ladite unité de traitement et de stockage (8) dans des catégorisations correspondantes, **caractérisé en ce qu'**il comprend un dispositif de rétroaction métrique (12) conçu pour être positionné sous ladite portion prédéterminée (TX), orienté vers le dispositif optique (10), pour stocker un paramètre supplémentaire du tissu (T) dans l'unité de stockage (8), c'est-à-dire la hauteur réelle du tissu (T).

2. Système (1) selon la revendication 1, comprenant également une deuxième source lumineuse (14), positionnée dans une position intermédiaire entre ledit premier poste (2) et ledit deuxième poste (3), configurée pour éclairer du haut vers le bas ladite portion prédéterminée (TX) dudit tissu (T).

3. Système (1) selon l'une quelconque des revendications précédentes, comprenant également un dispositif de pointage optique (13) relié audit dispositif optique (10) et configuré pour indiquer toute portion défectueuse sur ladite portion prédéterminée (TX) dudit tissu (T) en transit entre ledit premier poste (2) et ledit deuxième poste (3).

4. Système (1) selon l'une quelconque des revendications précédentes, comprenant également un premier dispositif de coupe (11) positionné entre ledit premier poste (2) et ledit deuxième poste (3) pour couper ledit tissu (T) le long d'une direction transversale (Y).

5. Système (1) selon l'une quelconque des revendications précédentes, comprenant également un deuxième dispositif de coupe (18) positionné entre ledit premier poste (2) et ledit deuxième poste (3) pour couper ledit tissu (T) le long d'une direction longitudinale (X).

6. Système (1) selon l'une quelconque des revendications précédentes, dans lequel ledit au moins premier (2) ou deuxième (3) poste comprend des moyens (5) pour mesurer le poids dudit tissu (T).

7. Système (1) selon l'une quelconque des revendications précédentes, ledit premier poste (2) et ledit deuxième poste (3) comprenant au moins un cylindre motorisé (4, 6), ledit cylindre (4, 6) comprenant un dispositif compteur métrique intégré configuré pour mesurer la longueur dudit tissu (T).

8. Système (1) selon l'une quelconque des revendications précédentes, dans lequel l'unité de traitement et de stockage de données (8) est configurée pour identifier sur ladite image ou vidéo reçue dudit dispositif optique (10) des parties de ladite portion prédéterminée (TX) dudit tissu (T) comportant : des défauts chromatiques ou structurels ou des portions dudit tissu comportant des motifs chromatiques ou géométriques, ladite unité de traitement et de stockage (8) associant, auxdits défauts chromatiques ou structurels ou aux portions dudit tissu (T) comportant des motifs chromatiques ou géométriques, des informations relatives audit tissu (T).
